## Europäisches Patentamt
## European Patent Office
## Office européen des brevets

(19)

(11) Publication number: **0 074 812**
A2

(12)

# EUROPEAN PATENT APPLICATION

(21) Application number: **82304760.0**

(22) Date of filing: **09.09.82**

(51) Int. Cl.³: **B 29 D 9/00**
**B 29 F 3/04, B 29 F 1/12**
**B 29 F 3/12**

(30) Priority: **11.09.81 GB 8127659**
**01.02.82 GB 8202792**

(43) Date of publication of application:
**23.03.83 Bulletin 83/12**

(84) Designated Contracting States:
**AT CH DE FR IT LI NL SE**

(71) Applicant: **DURAPIPE LIMITED**
**Norton Canes**
**Cannock Staffordshire, WS11 3NS(GB)**

(72) Inventor: **Nash, David Daniel**
**113 Kings View Drive**
**Bolton Ontario L0P RA0(CA)**

(72) Inventor: **Battye, Philip Gerald**
**1 Rushmead Drive**
**Loose, Maidstone, Kent(GB)**

(74) Representative: **Howden, Christopher Andrew**
**FORRESTER & BOEHMERT Widenmayerstrasse 4/1**
**D-8000 München 22(DE)**

(54) **A method of and apparatus for producing multi-layered plastics products.**

(57) In an extrusion head for use in producing multi-layered plastics products, the head comprises a central mandrel 15 and an outer structure 4, 5, 6, 7, 8, encircling the mandrel and defining, with the mandrel, a passage extending to an extrusion outlet 16. A plenum chamber 40 is provided at the end of said passage remote from the extrusion outlet, and ducts 43, 43a are provided for supplying plastics material to said plenum chamber 40 to pass therefrom along said passage. The said passage includes, at a position therealong which is downstream of the plenum chamber, a portion of limited axial extent defined between the outer structure and an equalisation ring 102 accommodated within a complementary groove 104 formed around the mandrel and projecting radially therefrom. The equalisation ring is adjustable transversely of the longitudinal axis of the head by adjustment screws extending, for access, to the exterior of the head, without passing through said passage. The head includes further supply passages 48, 52 extending from respective further plenum chambers 46 and 50 which communicate with the extrusion passage defined between the mandrel 15 and the outer head structure at respective positions downstream of the ring 102.

EP 0 074 812 A2

Description of Invention

"A method of and apparatus for producing multi-layered plastics products"

THIS INVENTION relates to a method of and apparatus for producing multi-layered plastics products and to plastics products produced by the method of using the apparatus.

Our U.K. Patent Application No. 8010750, published as Specification No. 2048155A, discloses an extrusion head for use in extruding plastics pipes of the kind comprising a plurality of concentric layers of different composition and/or characteristics, the head comprising a central mandrel and an outer structure encircling the mandrel and defining, with the mandrel, an annular-section extrusion passage extending to an annular extrusion outlet die. In the extrusion head disclosed in our Application No. 8010750 a first annular plenum chamber is provided at the end of the annular-section extrusion passage furthest from the extrusion outlet, said first annular plenum chamber being defined between the mandrel and the outer head structure, and second and third annular plenum chambers defined within the outer structure are connected, via respective frusto-conically tapering annular-section supply passages, coaxial with the mandrel, to said annular-section extrusion passage at respective axial positions spaced downstream of the first annular plenum chamber. These frusto-conically tapering annular-section supply passages are each partially defined by a respective annular adjustment ring bounding the outer side of the respective supply passage and adjustable transversely relative to the outer structure and the mandrel by respective adjustment screws extending radially from the outer structure. In operation, molten or plasticised plastics material is fed to each of the plenum chambers and proceeds therefrom to the extrusion passage so that there is passed to the extrusion outlet a multi-layered plastics flow comprising a plurality of concentric annular-section layers, each said layer being provided by the plastics material supplied from a respective said plenum chamber, with the innermost layer corresponding to the first plenum chamber and the middle and outermost layer corresponding to the two further plenum chambers. By transverse adjustment of the adjustment rings associated with the second and third plenum chambers, localised variations in the thickness of the extruded layers delivered from these plenum chambers can be achieved, but there is no independent means of adjustment of the thickness of the inner layer. It would, of course, be possible to form the supply passage for the material of the inner layer as an annular supply passage in the outer structure, in the same way as for the supply passages for the other two layers, and to utilise a similar annular adjustment ring disposed on the radially outer side of the respective passage and adjustable by respective adjustment screws extending radially from the outer structure. However, such an arrangement would necessitate a longer head structure which, apart from the physical inconvenience of the increased size and cost would have the further disadvantage of being less rigid making accurate control of the thickness distribution of the product issuing from the extrusion outlet difficult if not impossible.

It is an object of one aspect of the present invention to provide an improved extrusion head in which the above noted disadvantage is avoided.

According to the present invention there is provided an extrusion head for use in producing multi-layered plastics products, the head comprising a central mandrel and an outer structure encircling the mandrel and defining, with the mandrel, a passage extending to an extrusion outlet, means for supplying plastics material to said passage at a position remote from the extrusion outlet, said passage including, at a position therealong which is downstream of the first-mentioned position, a portion of limited axial extent defined between the outer structure and an equalisation element accommodated within a complementary groove formed around the mandrel and projecting radially therefrom, said ring being adjustable transversely of the longitudinal axis of the head by adjustment means extending, for access, to the exterior of the head, without passing through said annular-section passage, the head including at least one further supply passage which is of annular cross-section and communicates with the extrusion passage defined between the mandrel and the outer head structure at a position downstream of said ring.

According to another aspect of the invention there is provided a method of producing an extruded multi-layered plastics product using the apparatus according to the first mentioned aspect of the invention, comprising supplying plasticised plastics material to said resin flow passages to pass, in the form of respective streams to the extrusion passage, to proceed along the extrusion passage as a plurality of concentric layers to the extrusion outlet, and adjusting the thickness of the or each of said layers which is formed of material which has passed through the or a respective said passage portion defined between the outer structure and said, or a said equalisation element, by operation of the adjustment means associated with the or the respective equalisation element accommodated within the or the respective complementary groove formed around the mandrel.

Embodiments of the invention are described below with reference to the accompanying drawings in which:-

FIGURE 1 is a view in axial section of an extrusion head embodying the invention,

FIGURE 2 is a view in cross section on the line II-II of Figure 1,

FIGURE 3 is a view, similar to Figure 1, of a modification.

FIGURES 4, 5 and 6 are diagrammatic views illustrating various plastics flow path configurations,

FIGURES 7a to 7e are diagrammatic views illustrating various plenum chamber cross-sectional shapes,

FIGURES 8a to 8e are diagrammatic views illustrating various plenum chamber configurations,

FIGURES 9 and 10 are diagrammatic views illustrating the configurations of different plastics supply passages for supplying plastics to plenum chambers,

FIGURE 11 is a view in axial section of apparatus embodying the invention for coating a longitudinally extended product, such as a cable, with plastics, and

FIGURE 12 is a partial view in axial section of apparatus embodying the invention for extruding a solid product.

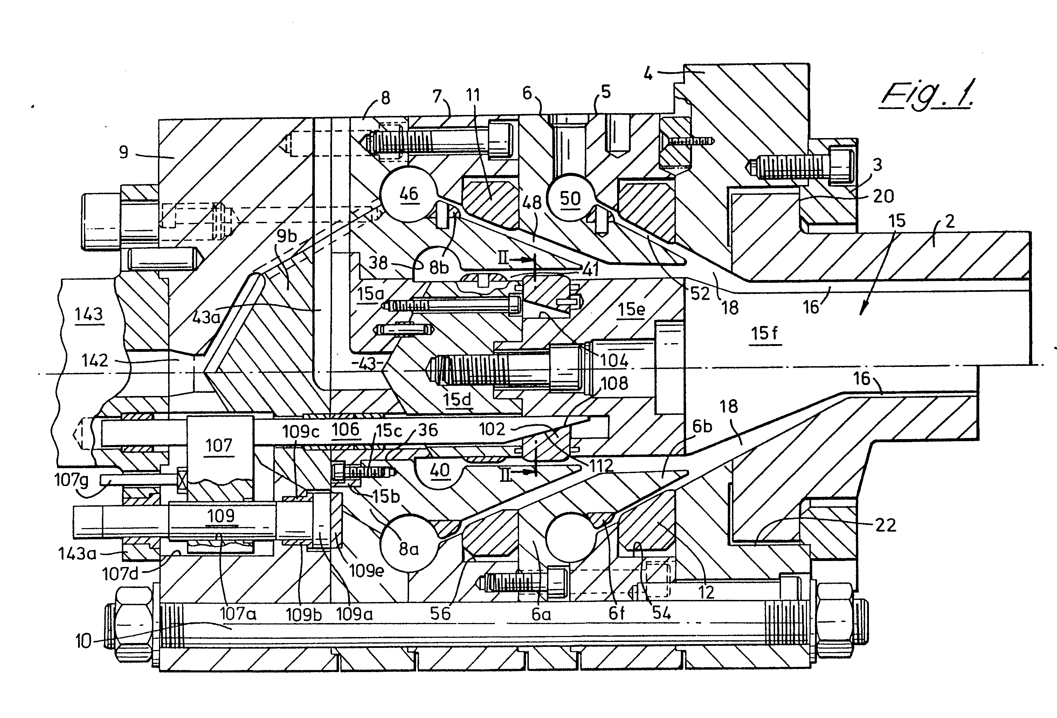

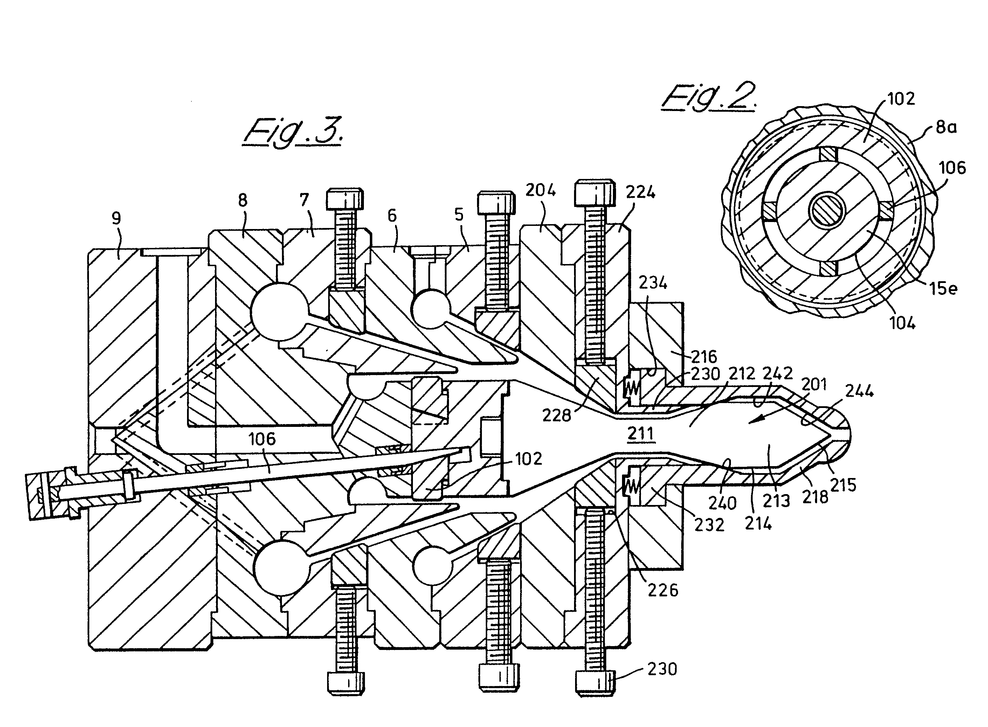

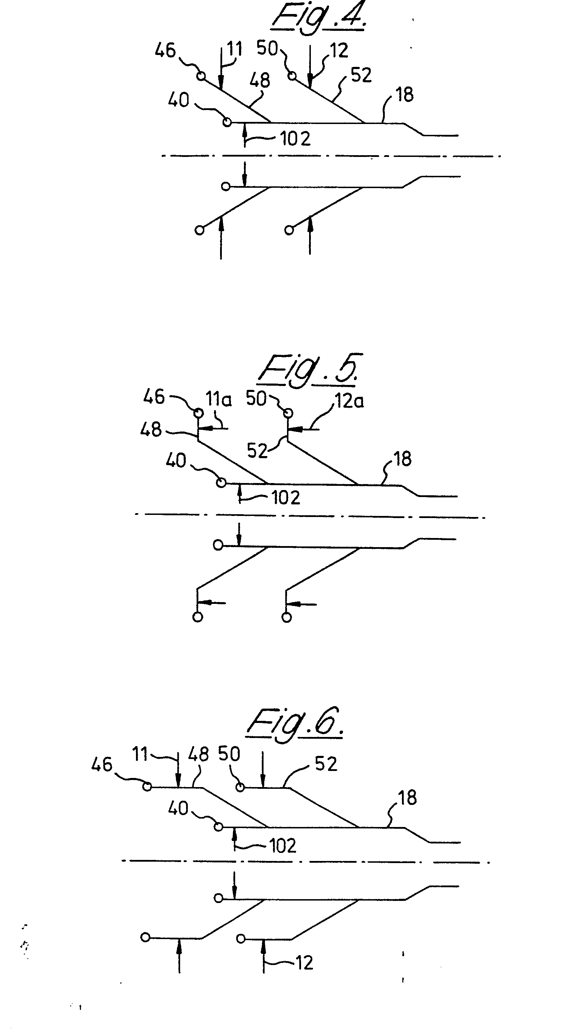

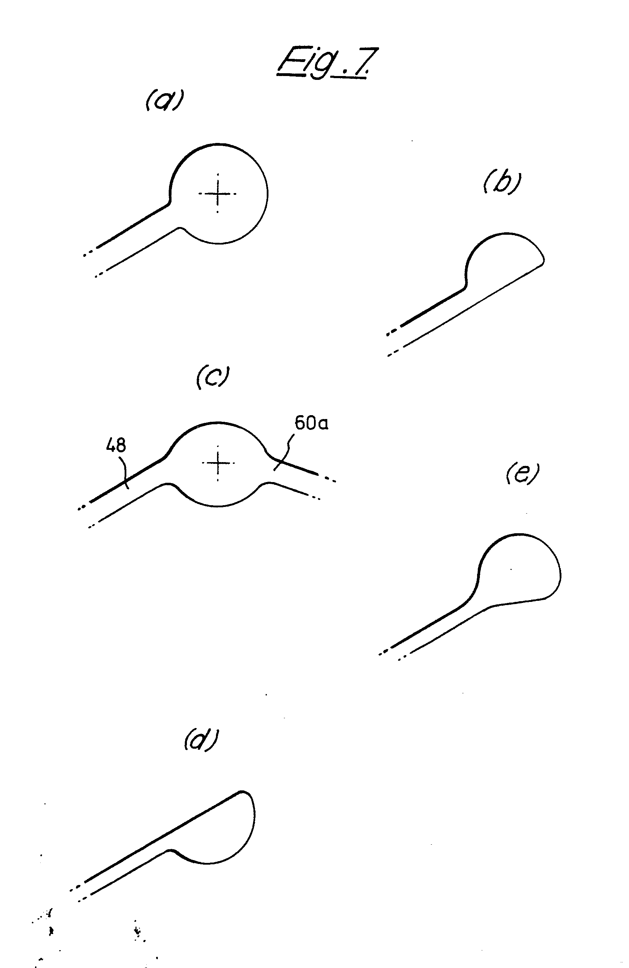

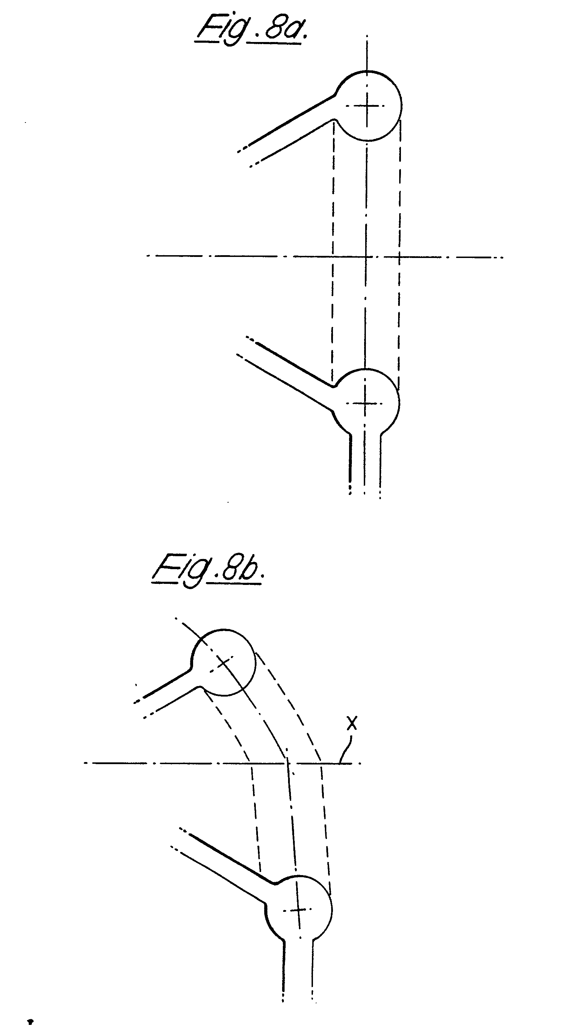

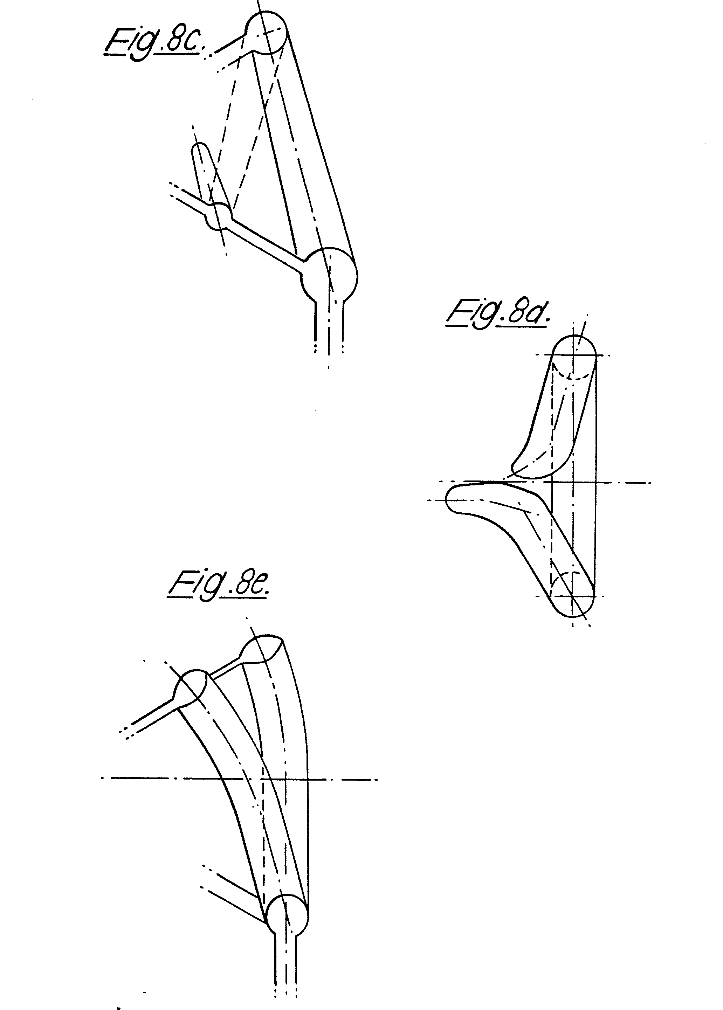

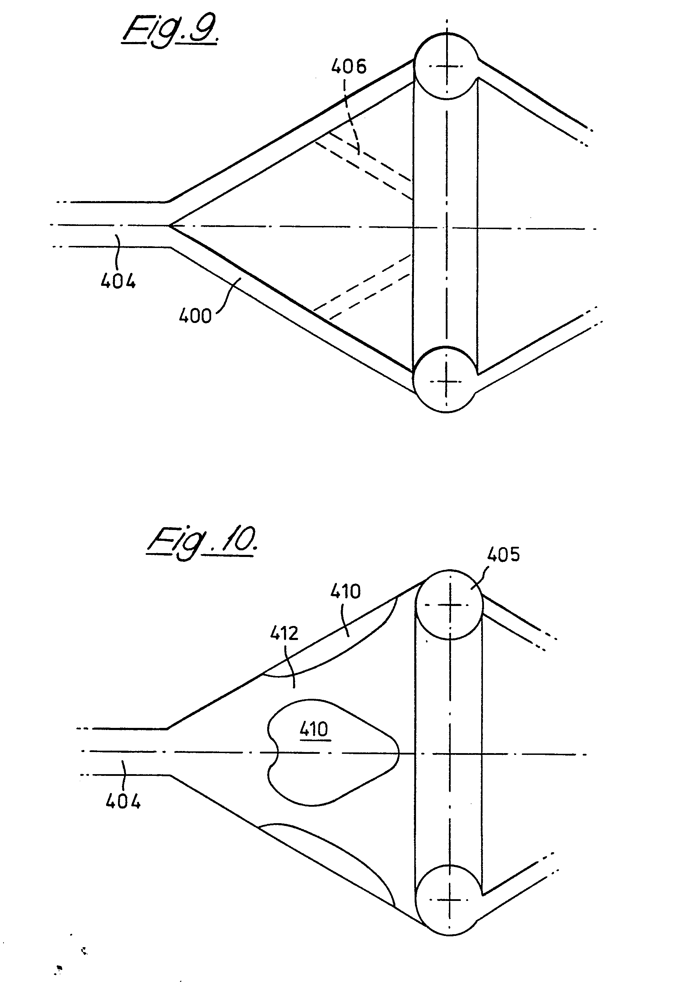

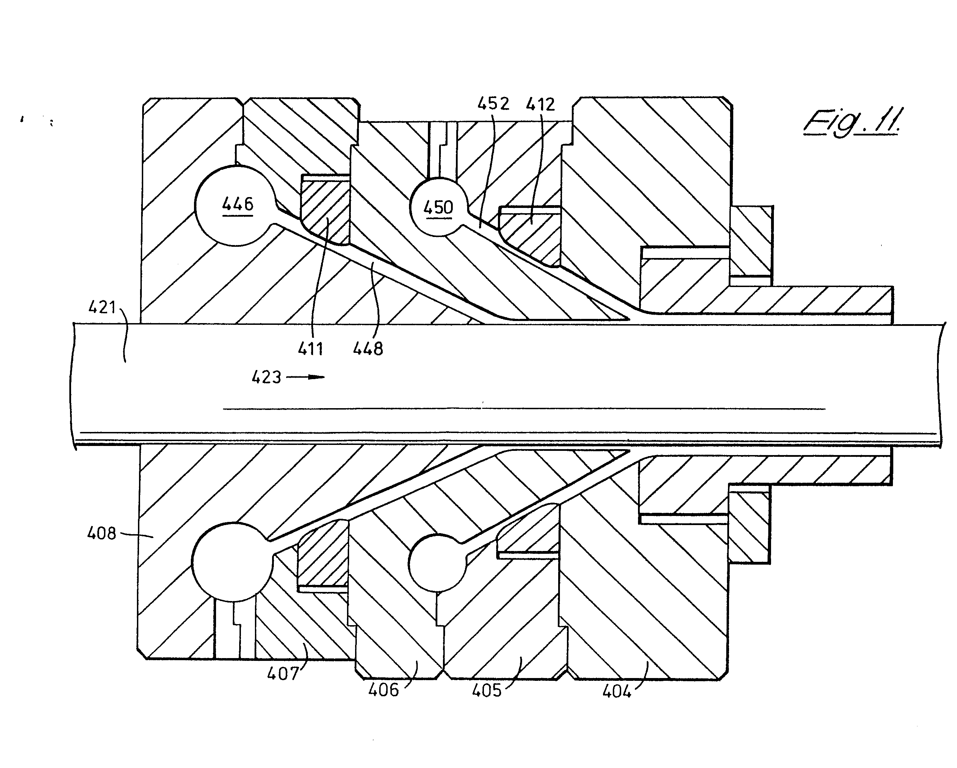

Referring to Figure 1, the extrusion head comprises a base member 9 in the form of a thick metal disc and, mounted in a stack on the base member 9, a plurality of annular plates, referenced, in order of increasing distance from the base member, 8, 7, 6, 5 and 4. The plates 4 to 8 and the base member 9 are held together by various bolts holding individual parts to adjoining parts, and by tie bolts 10 extending longitudinally, i.e. parallel with the head axis, through member 9 and all of the plates 8, 7, 6, 5 and 4.

The face of the member 9 adjoining the plate 8 is formed with a tapering hollow in which is received a mating complementary insert member 9b affording an end face, adjoining plate 8, which is co-planar with the corresponding end face of the member 9.

Fitted within the plate 8 is an annular inner member 8a, and fitted within the central aperture in member 8a is a root portion 15a of a mandrel 15 extending axially within the die away from base 9.

The portion of the radially outer surface of the insert member 9b which lies closer to the end face of base 9, which engages plate 8 is formed as a respective part of a conical surface co-axial with the head, and increasing in radius towards the front end of the head, i.e. in the direction towards plate 4 and the mating portion of the surface of the hollow in base 9 which engages this conical surface is correspondingly conical. The radially outer surface of the part of annular inner member 8a nearer the base 9 is formed as an extension of the frusto-conical outer surface of the insert 9b, and mates with a correspondingly conical surface of the aperture through plate 8.

The root portion 15a of the mandrel is externally cylindrical and is received as a close fit in a correspondingly cylindrical axial bore in the member 8a. The root portion 15a has, at its rear end, i.e. its end nearer member 9, a radially outwardly extending flange 15b received closely in a correspondingly dimensioned counter-bore at the rear end of the axial bore through member 8a.

The rear faces of the flange 15b, member 15a, member 8a and member 8 are co-planar for snug engagement with the respective parts of the composite co-planar face presented by base 9 and insert member 9b.

The flange 15b is secured in its counterbore by bolts 15c passed through apertures in the flange into the member 8b, and the member 8b is in turn secured to the base 9, with the insert 9b, flange 15b and the inner portion of plate 8 clamped therebetween, by bolts, not shown, extending parallel with the axis of the head.

A front die part 2 has a root portion retained in a recess in the plate 4 by means of a retaining plate 3. The front die part 2 has a central passage therethrough, the portion 16 of said passage which is within the forward portion of the front die part 2 being cylindrical and coaxial with the outer surface of said forward part, whereas the part 18 of said central passage which extends through said root portion of the front die part is frusto-conical in form converging in the forward direction and being coaxial with said cylindrical bore. On the exterior of the front die part, a planar annular shoulder 20 extends across the root of the front die part and cooperates with the opposing surface of plate 3

In Figure 1, there is shown, above the longitudinal axis of the head, one form of mandrel tip with cooperating front die part, and, below the longitudinal axis, an alternative form of mandrel tip with cooperating front die part.

The recess in the plate 4 in which the front die part is accommodated is in the form of a cylindrical bore 22 extending axially into the plate 4 from the front face thereof, the diameter of the bore 22 being substantially greater than the external diameter of the root portion of the front die part 2 accommodated therein. The front retaining plate 3 is in the form of an annular disc with planar end faces, the forward portion of the front die part 2 extending through the central aperture in the retaining plate 3 with substantial diametrical clearance. The front retaining plate 3 is clamped to the plate 4 by means of a plurality of clamping bolts. When the plate 3 is securely clamped to the plate 4, there is sufficient axial spacing between the rearwardly directed end face of the plate 3 and the opposing end face of the bore 22 to allow the front die part 2 to slide transversely relative to the head axis without any appreciable play in the axial direction.

Adjustment bolts (not shown) are provided for centering the die part 2 with respect to the annular plates, or varying the eccentricity of the die part 2 with respect to these plates.

As shown in Figure 1, the plates 4 to 8 and member 8a, and the mandrel 15, together define, in conjunction with the front die part 2 and equalisation rings 11 and 12 discussed in more detail below, an annular extrusion passage opening in an annular outlet defined between the mandrel part 1 and the front die part 2.

The plate 8 has the general form of a flat disc, the rear face of which engages the front end face of the base member 9, and the part 8a has the form of a tubular spigot extending forwardly from the plate 8, the exterior of said spigot tapering frusto-conically in the forward direction. The rearward part of the axial bore 36 extending through the member 8a is a close sealing fit around the root portion 15a of the mandrel 15. However, at a position spaced slightly rearwardly from the forward end of the plate 8 an annular groove 38 is formed internally in the member 8a, defining, with the opposing external wall of the mandrel 15 an annular plenum chamber 40. The mandrel 15 comprises, in axial succession from root portion 15a to the mandrel tip: portion 15a, portion 15d bolted to portion 15a, portion 15e bolted to portion 15d, and tip portion 15f. The part of the mandrel formed by portions 15a, 15d and 15e is of substantially constant external diameter. The mandrel 15 is reduced slightly in diameter in the region of the groove 38 and downstream thereof, and the downstream part of mandrel portion 15a and portions 15d and 15e are all of substantially the same diameter. The axial bore through the spigot part of member 8a is enlarged in diameter from the forwardmost edge of the groove 38 to the front end of the spigot member to define, extending from the plenum chamber 40 towards the extrusion outlet 16, a rearwardmost part 41 of the extrusion passage. The plenum chamber 40 is connected via inclined bores in the mandrel with an axial bore 43 extending rearwardly in the portion 15a, the bore 43 being connected in turn with a radial bore 43a formed partly in part 15a and partly in insert 9b. The rear end of mandrel portion 15d is formed as a conical tip co-axial with the head, and the mating front end of portion 15a is formed as a correspondingly frusto conical recess ending in the bore 43. The inclined bores referred to are each formed by a respective groove formed on the conical surface of portion 15d and a registering groove formed in the mating surface of part 15a.

The bore 43a is formed by two registering half circular section grooves formed respectively on the face formed by members 8, 8a, and 15a, on the one hand and by members 9 and 9a on the other hand, the bore 43a ending in an inlet orifice on the periphery of the head. The plasticised plastics material may be supplied to the plenum chamber 40 via said inclined bores and the bores 43 and 43a which constitute plastics supply passages, to pass from the chamber 40 to the extrusion passage.

A second plenum chamber 46, is defined partly by an annular groove formed around the spigot portion of the member 8a, partly by an annular groove formed around said spigot portion in the front end face of the plate 8, partly by an annular groove formed in the plate 7 and forming the transition between the rear end face of the plate 7 and the axial passage through the plate 7, and partly by a ring 8b pinned onto the member 8a. The plenum chamber 46 is connected with the extrusion passage proper via a passage 48 which is annular in cross section and is of generally frusto-conical form, sloping, in the forward direction from the plenum chamber 46, towards the central axis of the head. The passage 48 is defined between, on the one hand, the outer surface of the spigot part of the member 8a, and, on the other hand, a part of the passage through the plate 7, the internal passage through the equalisation ring 11, and the rearward portion of the internal axial passage through the plate 6, the plate 6 having a rear face engaging the front face of the plate 7.

Plasticised plastics material is supplied, in use, to the plenum chamber 46, via passages each defined by a groove formed on the rearwardly and outwardly facing surface of the insert 9b and a registering groove formed on the forwardly and inwardly facing surface of the base 9. In the

**0074812**

arrangement shown, the rearwardly facing surface of insert 9b (and thus the mating surface of base 9) comprises a rearwardmost, less acutely tapering conical part and a forwardmost, more acutely tapering frusto-conical part, and a tapering bore 142 is formed axially through the base, the plastics supply passages for the plenum chamber 46 comprising primary large diameter passages, radiating from bore 142, over the less acutely tapering parts of the mating surfaces of insert 9b and base 9, and minor passages branching from each said primary passage and extending over the more acutely tapering parts of said mating surfaces to the plenum chamber 46. The bore 43a does not, of course, intersect any of these passages.

The bore 142 communicates with an axially extending plastics supply duct, shown only partially.

The plate 6, like the plate 8, comprises a rear portion 6a in the general form of a flat disc and a spigot portion 6b extending axially forwards from the spigot portion 6a. The outer surface of the spigot portion 6b is substantially frusto-conical, tapering forwardly from the portion 6a, and in this case the axial bore through the plate 6 tapers frusto-conically from the rear face of the part 6a to a position somewhat downstream of the position of the front end of the spigot portion 8b, (this tapering portion of the passage through plate 6a partly defining the radially outer wall of the frusto-conically tapering passage 48), whilst the remainder of the bore through the plate 6 is substantially cylindrical.

A third annular plenum chamber 50 is defined partly by an annular groove formed in the front face of the disc part 6a around the root of the spigot part 6b, partly by a ring 6f, similar to ring 8b, pinned to part 6b, and partly by an annular groove formed in the plate 5 and forming the transition between the rear face of the plate 5 which engages the front face of plate 6 and the axial passage through the plate 5. The plenum chamber 50 is also connected with the extrusion passage by a passage 52 of annular cross section tapering forwardly from the plenum chamber 50 towards the head axis, the passage 52 being defined between the outer surface of the spigot part 6b and an opposing, correspondingly frusto-conical surface defined partly by the axial passage through the plate 5 and partly by the axial passage through the equalisation ring 12.

The plenum chamber 50 is connected via a radially extending duct, with a port formed on the same upper lateral face of the head as is the port in which bore 43a terminates, and in use, plasticised plastics material is fed to these two ports, from a singlesource, via a flow distributing manifold clamped to said face and incorporating flow controlling valves.

The equalisation rings 11 and 12 are adjustably mounted in the head in a manner similar to the root portion of the front die part 2. Thus, the rings 11 and 12, which are externally cylindrical and have planar end faces are accommodated in respective radially inwardly open annular channels defined by cylindrical counter bores 56, 54, respectively in the plates 7, 5, respectively and adjoining rear end faces of the plates 6, 4, respectively. Each ring 11, 12, has an external diameter substantially smaller than that of the respective bore 56, 54, and is slidable transversely, without appreciable axial play, between the planar end wall of the respective bore 56, 54 respectively and the opposing planar end face of the respective plates 6, 4, said opposing planar faces slidably engaging the opposing planar end faces of the respective rings.

As with the front die part 2, the concentricity or eccentricity of each ring 11, 12, relative to the head axis, is adjustable by means of four adjustment bolts, not shown, the respective set of four adjustment bolts for each ring 11, 12 being distributed at intervals of 90$^{o}$ around the head and being screw-threadedly engaged in respective radial bores in the respective plates 7, 5, the adjustment bolts of each set extending, at their inner ends, into the respective bore 56, 54, to engage the periphery of the respective ring 11, 12.

A ring 15h is pinned around the mandrel 15 just downstream of the chamber 40 in much the same way as the rings 8b and 6f are pinned to the members 8a and 6.

In operation of the apparatus, plasticised plastics material is supplied to the plenum chambers 40, 46, 50 and passes therefrom along the respective passage 41, 48, 52 to the annular extrusion passage, the material supplied from the respective plenum chambers remaining disposed in respective annular layers in the annular-section flow of plastics material along the extrusion passage, so that a pipe comprising three concentric layers is extruded from the outlet 16.

The structure and operation of the head of Figure 1 is similar to that described in our co-pending U.K. Patent Application No. 8010750, published as specification No. 2048155, to which reference should be had for a more detailed discussion.

One significant difference between the head shown in Figure 1 and that disclosed in our U.K. published specification No. 2048155A is that provision is made for local adjustment of the radial thickness of the annular flow of plastics material from the plenum chamber 40 along the extrusion passage, such provision comprising an equalisation ring 102 accommodated within an annular groove 104 formed around the mandrel at a position just downstream of the plenum chamber 40 and slightly upstream of the downstream or front end of the spigot part of the member 8a. The ring 102 has an internal diameter larger than the diameter of the bottom of the annular groove 104 and the ring 102 is a sliding fit in the groove 104 so that, as explained in detail below, the ring 102 is adjustable in the groove 104 transversely of the longitudinal axis of the die.

Such transverse adjustment of the ring 102 is effected by means of a plurality of adjustment rods 106 (four in the embodiment shown) each of which extends longitudinally within the mandrel 15 and has a wedge-like tapered nose which is engaged in the gap between the inner surface 108 of the ring 102 and the portion of the part 15e which lies radially inwardly of the ring 102. The rods 106 are adjustable individually longitudinally, so that, by virtue of the tapering nose portion of the rods 106 the thickness of the portion of each rod 106 which lies between the spigot portion 15 and the surface 108 can be adjusted to perform substantially the same function as the adjustment screws utilised for the rings 11 and 12.

Each rod 106 extends through a respective set of aligned bores, parallel with the head axis, in the mandrel portions 15a and 15d, insert 9b and base 9 and in the adjoining wall of the duct 143. Each rod 106 has, adjacent its rear end, an integral lug 107 which has, in cross section, the form of an oblong with rounded corners, the longer dimension of the oblong extending transversely with respect to the rod and radially relative to the head. Each lug 107 is received as a close sliding fit in a correspondingly shaped radially extending blind slot or recess 107d extending into the base 9 from the rear face thereof and constituting an enlargement of the respective bore in the base 9 receiving the respective rod. Adjacent its radially outer end each lug 107 is formed with a screw-threaded bore 107a extending therethrough parallel with the axis of the rod and receiving a bolt 109, a head portion 109a of which is supported by a bearing 109b for rotation in a bore 109c formed through the base 9 to intersect the respective slot 107d, the head of the bolt being retained against longitudinal movement by the bearing 109b and by a thrust pad 109e received in a respective recess formed in the composite face presented by member 8b and member 8. The other end of each bolt 109, which is the end operated on in use, extends through a respective bore in the flange 143a of the duct, to project from said flange, the bolt being also supported by a bearing in said bore in said flange. Thus, the longitudinal position of each rod 106 is adjustable by rotation of the respective bolt 109, via the projecting end thereof. Each lug 107 also bears, extending parallel with the respective rod, an indicator projection 107g which projects through a further aperture in the flange 143a, to allow the extent to which it projects to be measured. Each rod 106 is supported, on its radially inner side, by the mandrel 15, up to its very end. A ramp face 112 is provided on each rod 106 to engage the frusto-conical internal surface 108 of the ring 102, said surface 108 having an inclination, relative to the head axis, corresponding to that of said ramp face to the head axis.

Besides the various bolts holding the respective parts of the head together, such parts are located accurately with respect to one another, in conventional manner, by dowels.

In operation of the head, the ring 102 serves a function entirely analogous with that of the adjustment rings 11 and 12, operation of which is described in our U.K. Published Specification No. 2048155A. Thus, the respective annular-section passage extending from the plenum chamber 40, 46 or 50 includes, at a position therealong downstream of the respective plenum chamber, a portion of said passage which is of limited axial extent (being defined between the bore in the spigot portion 8b and the ring 102 in the case of the passage extending from chamber 40, and being defined between the outer, conical surface of the members 8b, 6 respectively and the respective ring 11, 12 in the case of the passages extending from the chambers 46 and 50 respectively) and which is of restricted radial width as compared with the adjoining parts of this passage. In operation, by appropriate transverse adjustment of the ring 102 by means of the rods 106, it is possible to compensate for variation, around the circumference, in the thickness of the annular-section layer of plastics material supplied from the plenum chamber 40, whilst by corresponding transverse adjustments of the rings 11 and 12 by means of the respective bolts, it is possible to provide corresponding compensation for the layers of plastics material supplied from the chambers 46 and 50.

Furthermore, since the means for adjustment of the rods and hence the ring 102 are accessible from the exterior of the die structure, transverse adjustment of the ring 102 can be effected without dismantling the head, and even during operation of the head, i.e. during extrusion of a multi-layered tubular product therefrom.

It will be noted that the ring 102 and the rings 11 and 12 are so formed that even when exactly centered on the axis of the head they project substantially into the respective annular passages which they partly define, thereby forming restrictions in such passages. The edges of the rings 11, 12 and 102 projecting into the respective such passages are rounded and profiled as viewed in axial section, as shown, in order to improve the flow characteristics of the respective passages.

The head of Figure 1 may be secured directly to the front end of an injection cylinder for molten plastics material, which would serve to supply the plenum chamber 46 with plastics material via the bore 142 and passages 140, the head being bolted to such an injection cylinder with the axis of the head corresponding with that of the injection cylinder. The duct 143 may form the outlet end of such an injection cylinder.

The inclined passages which connect the axial passage 43 with the plenum chamber 40 pass, of course, between adjacent adjusting rods, as do the passages defined between insert 9b and base 9.

Figure 3 shows a modification of the head of Figure 1 which may be utilised for the supply of plastics material in a plurality of layers to moulding apparatus such as that described in U.K. Patent No. 1,572,514 for example when it is desired to form, by injection moulding, articles comprising a plurality of (e.g. three layers) of plastics material of different compositions and/or characteristics. The modification of Figure 3 may likewise be used with any other injection or flow moulding machine.

The apparatus of Figure 3 differs from that of Figure 1 in that the adjusting rods are inclined with respect to the head axis and are adjusted directly, and in other minor constructional features 3 as well as in the respects noted below. Thus, in place of the mandrel part 15f the apparatus of Figure 3 comprises a mandrel part 201 which is, like the part 1, screwed onto the core part 15. Like the mandrel part 1, the part 201 tapers frusto-conically from the part 15f to a co-axial cylindrical portion 211, but this cylindrical portion 211 at its downstream end merges with an outwardly frusto-conically tapering portion 212 of an enlarged head member 213, which includes, in addition to the portion 212, an enlarged co-axial cylindrical portion 214 downstream of portion 212 and, downstream of portion 214, a conical end portion 215 tapering from the portion 214 to a point at the front end of the member 213.

In place of the unitary end plate 4, the apparatus of Figure 3 comprises two end plates 204 and 224 disposed in abutment with one another in series along the head axis, the end plate 204 having a form corresponding substantially to that of the upstream end of the plate 4, while the plate 224 is formed, on its face adjacent the plate 204, with a circular recess 226 in which is accommodated, with radial clearance, as a sealing sliding fit, a control ring 228, in a manner completely analogous to the control rings 11 and 12 and the die 2, the ring 228 being similarly adjustable as to its eccentricity by means of four adjustment bolts 230, regularly spaced around the head axis, two of these bolts being shown.

Mounted on the outer face of the plate 224 which faces away from plate 204 in the downstream direction is an annular support member 216 coaxial with the head, and which supports, with provision for axial movement, a hollow nozzle member 218 which receives the head member 213.

The plate 224 has, on its side remote from the plate 204, an axially projecting cylindrical tubular guide portion 230 having a cylindrical axial bore through which cylindrical portion 211 extends with axial clearance. The nozzle 218 is generally cylindrical externally, with a tapering tip portion and an enlarged circular flange 232 at its upstream end which is an axially sliding fit in an axial counterbore 234 formed in the support member 216 from the rear face thereof which engages plate 224. The major cylindrical portion, of smaller diameter, of the exterior of the nozzle 218 is similarly a sliding fit in the remainder, of corresponding diameter, of the central bore through member 216.

The nozzle 218 is urged axially forwards relative to plate 224 by compression springs acting between the front face of the plate 224 and the rear face of the flange 232.

The nozzle 218 is formed with an axially extending through passage, in which the head member 213 is located, and which is substantially complementary with the form of the head member, but radially enlarged with respect thereto. Thus, the passage within the nozzle comprises an upstream portion defined by a frusto-conical surface 240 diverging in the downstream direction, an intermediate portion defined by a cylindrical surface 242, and a downstream portion defined by a frusto-conical surface 244 converging in the downstream direction, to a cylindrical outlet portion opening onto the nozzle tip.

In the extended position of the nozzle 218, i.e. the position in which the nozzle has been fully displaced by the springs acting thereon, the portion 212 of the head member 213 bears sealingly on the surface 240 to prevent the flow of plastics material past the head portion 213.

When the nozzle is engaged by a complementary socket of a member to be supplied with plastics material, for example a mould or some other device to be so supplied, the nozzle 218 is thereby displaced rearwardly relative to the head and the head member 213 into its rearwardmost position in which the surface 240 is spaced rearwardly, and thus radially outwardly from the head member 213 and a substantially uniform radial clearance is provided between the head member 213 and the walls of the nozzle passage, providing a passage for fluid flow from the apparatus, via the annular gap between portion 211 and the tubular part 230. The forward end of the bore in the part 230 is flared frusto-conically to match the surface 240 in this rearwardmost position of the nozzle. The rearwardmost part of the passage through the nozzle 218 is formed as a cylindrical bore which is a sealing sliding fit over the cylindrical exterior of the portion 230.

It will be noted that the rings 11, 12 and 102 in the arrangement of Figure 1 and the ring 228 in the arrangement of Figure 3 project radially into the respective passages and thereby create localized radial restrictions in such passages and that the axially extreme edges of said rings exposed in the respective passages are radiussed as viewed in axial section, to promote smooth flow of plastics through the respective passages.

In the embodiments discussed above, the flow passages 48, 52 extend in a substantially conical fashion from the respective plenum chambers 46, 50 to the annular extrusion passage, and the control rings 11, 12 are adjustable radially or diametrally with respect to the longitudinal axis of the extrusion head. The arrangement of the embodiments discussed above may be represented schematically by Figure 4, in which the respective passages are indicated by solid lines, the plenum chambers by solid spots and the control rings 102, 11, 12 by respective arrows.

However, there are other arrangements which might be adopted, such as those indicated schematically in Figures 5 and 6 in which the same conventions are adopted as in Figure 4. Thus, Figure 5 illustrates an arrangement in which the flow passages 48 and 52 extend radially inwardly from the respective plenum chambers 46, 50 for some way before proceeding in conical fashion towards the extrusion passage 18 as in the arrangement of Figure 4. In the arrangement of Figure 5, control rings 11a, 12a corresponding to control rings 11 and 12 in the arrangement of Figure 4, are arranged to cooperate with the radially extending portions of the respective passages 48, 52 and are movable axially with respect to the extrusion head axis to adjust the axial width of the radially extending portions of the passages 48, 52. If desired, the arrangement may be such that limited tilting of the planes of the rings 11a and 12a relative to the planes of the corresponding radially extending portions of the passages 48, 52 may be effected by way of adjustment, so that the effective axial width of the flow passages 48, 52 at the positions of the rings 11a, 12a may be varied around the circumference of the extrusion head.

In the variant represented by Figure 6, the passages 48, 52 each have, extending from the respective plenum chambers 46, 50, respective generally cylindrical portions, extending in the axial direction towards the extrusion outlet, which cylindrical portions connect with respective conical portions, arranged in substantially the same manner as the conical passages 48, 52 in the embodiment of Figure 4, which conical portions, as in Figure 4, communicate at their narrow ends with the extrusion passage 18. In the arrangement of Figure 6, the control rings 11, 12 associated with the passages 48, 52 respectively, are, as in the arrangement of Figure 4, adjustable diametrally with respect to the longitudinal axis of the extrusion head, but the rings 11, 12, in the arrangement of Figure 6, cooperate with the axially extending cylindrical portions of the passages 48, 52.

The variations discussed with reference to Figures 5 and 6 make possible, in certain applications, constructional improvements, for example allowing more economical manufacture and/or assembly or servicing, or a more compact structure etc.

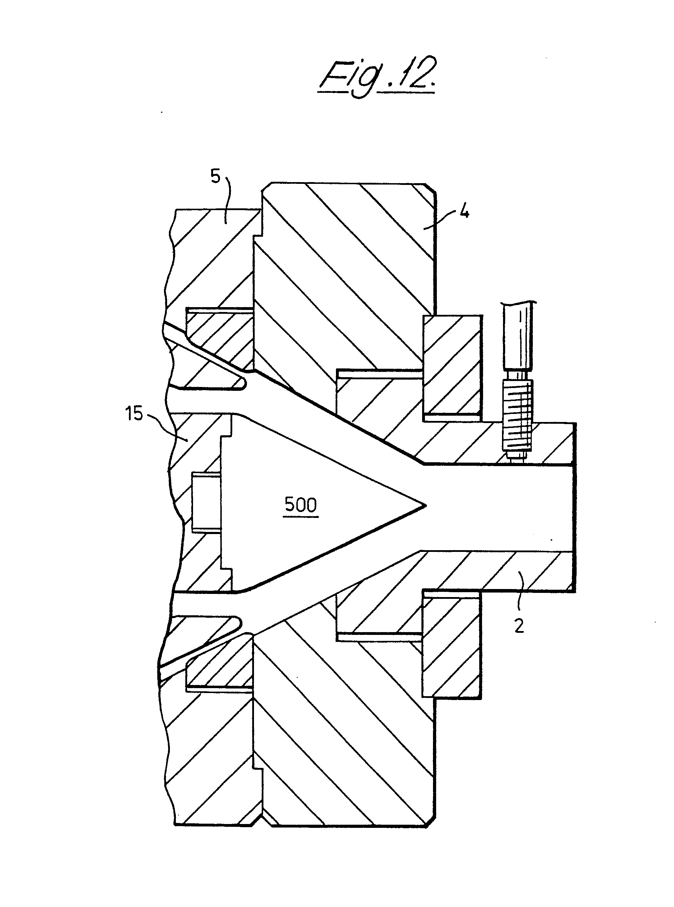

In the arrangements shown in Figures 1 to 3, plenum chambers 46 and 50 are substantially toroidal, i.e. in cross section perpendicular to the longitudinal axis of the extrusion head, (hereinafter referred to simply as "perpendicular section"), the plenum chambers 46 and 50 have the form of a circular band defined between radially inner and radially outer concentric circular edges, whereas in longitudinal section along the longitudinal axis of the extrusion head (hereinafter referred to simply as "longitudinal section") the chambers 46 and 50 are substantially circular. However, the plenum chamber 40, although having a circular form in perpendicular section has, in longitudinal section, a semi-circular or "D" shape. The plenum chambers 46 and 50, could, if preferred, although having the form of circular rings in perpendicular section, have, in longitudinal section, the form of semi-circles surmounted, on their diameters, by triangles, to afford kite-like shapes, in longitudinal section.

It has been found that the form of the plenum chambers, in longitudinal section, has a substantial bearing upon the operation of the apparatus and the quality of the product. Figure 7a illustrates a shape, in longitudinal section, corresponding to that of the plenum chambers 46 and 50 in Figure 1 and Figure 7b illustrates a shape in longitudinal section corresponding to that of the variant referred to above. Figure 7c illustrates a modified form of plenum chamber in which the shape in longitudinal section is generally ellipsoidal, with the resin flow passage, such as passage 48 or 50 and shown extending to the left from the plenum chamber, meeting the plenum chamber at a point on the major axis of the ellipse, and an inlet port 60a meeting the plenum chamber at an opposing position on said major axis, i.e. at the right in Figure 7c. The form illustrated in Figure 7c is particularly suitable for use with heat-sensitive materials such as PVC which require a more streamlined shape in longitudinal section, for the plenum chamber. Figure 7d illustrates a plenum chamber which is, in longitudinal section, substantially semi-circular in form, i.e. a form similar to that of the plenum chamber 40 in the embodiments of Figures 1 to 4. It will be appreciated however that, as shown in Figure 7d, such a form may also be utilised in conjunction with a resin flow passage extending from the plenum chamber substantially conically towards the axis of the extrusion head, so that the "flat" side of the sectional shape is afforded by a frusto-conical radially outer surface defining part of the plenum chamber. The plenum chamber form shown in Figure 7e is effectively a hybrid between the form of Figure 7a and Figure 7b, with the contours more gently rounded to reduce turbulence etc. In each of Figures 7a to 7e, the passage extending towards the extrusion passage is shown as extending to the left from the plenum chamber. In the following description, simply in order to distinguish passages which supply plastics to a plenum chamber from passages which lead plastics from a plenum chamber to the main extrusion passage, the former passages are referred to as plastics supply passages and the latter are referred to as resin flow passages.

It is not necessary, in every case, for each plenum chamber to have the form of a ring in perpendicular section, (as herein defined). Thus, while this is true of the plenum chambers used in the embodiments of Figures 1 to 3, (such a plenum chamber being illustrated schematically in Figure 8a) in the arrangement of Figure 8b, the plenum chamber has a form such that, although the chamber still forms a closed loop, the longitudinal position and radial distance from the longitudinal axis x of the chamber varies with angular position around said axis in the manner indicated. In the arrangement shown in Figure 8b, the resin flow passage, extending to the left, is still of substantially conical form, i.e. is defined between an internal and an external conical surface, and the median line of the chamber lies substantially between imaginary extensions of said inner and outer conical surfaces all around the periphery of the chamber. It is, however, not essential that the resin flow passage should be strictly conical in this manner.

Furthermore, it is not always essential for each plenum chamber to take the form of a closed loop encircling the longitudinal axis of the extrusion head. A plenum chamber may take any desired form intersecting with the respective resin flow passage. Thus, as indicated in Figure 8c, a plenum chamber may take the form of a spiral about the longitudinal axis of the head, for example being defined by opposing grooves formed in opposing substantially conical surfaces, which surfaces between them define the respective resin flow passage connecting the plenum chamber with the extrusion passage. As shown in Figure 8c, the spiral may extend over more than one complete turn about the axis of the head. A plenum chamber may likewise take the form of an open loop about the axis of the extrusion head, of the form illustrated in Figures 8d and 8e, the resin supply passage 60b which supplies plastics to the plenum chamber meeting the plenum chamber at a point intermediate the ends thereof.

It is also possible to utilise different configurations of plastics supply passages to supply plastics material to the plenum chambers. Thus, a single plastics supply passage may communicate with a toroidal plenum chamber at one angular position about the longitudinal axis of the head, or a single inlet port to the head may divide, within the head, into a plurality of supply passages which connect with the plenum chamber via respective ports arranged at different angular positions around the longitudinal axis of the head. Thus, Figure 9 illustrates, in solid lines, an arrangement in which a plurality of supply passages 400 branch from a single axial inlet passage 404, and diverge, at an angle to the axis of the head, to meet the plenum chamber 405, in an arrangement similar to that described in respect of the plenum chamber 46 and 40 in Figure 1. If desired, as shown in dotted lines, further passages 406 may branch from the passages 400 to meet the plenum chamber in respective further ports. By way of example, a single inlet passage 404 may thus communicate with the respective plenum chamber _via_ one, two, four or eight supply passages.

The supply passages themselves need not be of uniform cross section throughout their length, but may be profiled and shaped in such a way as to improve the resin flow characteristics. Thus, it may be advantageous for each supply passage to spread or fan out towards the plenum chamber, to enter the plenum chamber _via_ a circumferentially elongate feed port. One way in which this may be achieved, as shown in Figure 10, is to form the plastics supply passages as respective parts of a conical supply passage, similar to the conical resin flow passages described above, i.e. as a passage of circular annular shape in perpendicular section, increasing in diameter from the axial inlet passage 404 to meet the plenum chamber 405 in a feed port in the form of a continuous annular slot, the conical supply passage being defined between an internal and an external conical surface, and to form at least one of these conical surfaces with projections or "islands" 410 adapted to engage the opposing conical surface to block the passage at these points and to define between adjacent islands respective supply passages 412. In this way, a wide variety of supply passage configurations can be obtained. In the arrangement shown in Figure 10, each passage 412, from a relatively narrow region, fans out circumferentially in the direction towards the plenum chamber, the passages 412, in the arrangement shown, connecting with one another again just upstream of the plenum chamber 405. In an arrangement such as shown in Figure 10, the "islands" 410 also, of course, provide regions whereby mechanical support for the member providing the inner, convex conical surface may be provided from the member providing the outer, concave conical surface. The fanned supply passage construction of Figure 10 provides a more even flow into the plenum chamber than do passages in the form of individual bores of the type shown in Figure 9.

It will be appreciated, of course, that the various measures described with reference to Figures 1 to 10 may be utilised in various combinations with one another, as dictated by requirements.

Figure 11 shows a further variant of the apparatus of Figure 1, which may be utilised for coating with plastics material a continuous elongate member such as a cable, metal bar or tube, or the like member, whether provided with a metal surface or not. As will be noted, the apparatus of Figure 11 corresponds approximately with the apparatus of Figure 1 with the central mandrel removed to leave, extending axially entirely through the head, a central passage to receive the cable or the like to be coated. In Figure 11, parts which are like to parts in Figure 1 have reference numerals which are 400 greater than the corresponding reference parts in Figure 1. Thus, in Figure 11, a rearwardmost annular member 408 has an axial bore therethrough through which the cable, indicated at 420, passes sealingly along the head axis. Plastics material fed from a first plenum chamber 446 passes along a conically tapering supply passage 448 and is applied to the surface of the cable 420 as the latter passes, in the direction of the arrow 423, the exit from the passage 448. Plastics material from a second plenum chamber 450 similarly passes along a conically tapering supply passage 452 and is applied to the exterior of the layer of plastics material supplied from the passage 448, the cable, thus provided with two concentric layers of plastics coating, passing through the exit die 402. In the same way as in the arrangement of Figure 1, the head of Figure 11 has control rings 411, 412, and a similar adjustable exit die 402 whereby the concentricity of the extruded plastics layers relative to the cable, and variation in thickness of the plastics layers around the cable may be adjusted as desired.

Figure 12 shows a further variant of the apparatus of Figure 1, intended for the extrusion of solid, as opposed to hollow, members. As an example, the apparatus of Figure 12 might be used for extruding a composite plastics member comprising a foamed plastics core enclosed in two non-foamed plastics coating layers. Where the foamed material of the core is rigid at normal temperatures, such a product, cut into appropriate lengths, might form lightweight structural members or utilitarian articles such as broom handles, etc. whereas where the plastics materials used are of a flexible or resilient nature at normal temperatures, such a product might be used, for example, for wood substitutes, and polymeric or elastomeric composite extrusions, for sealing or draught preventative purposes, or for packaging etc. As will be noted, the apparatus of Figure 12 differs from that of Figure 1 only in that the free end portion of the mandrel indicated at 500, instead of tapering to a cylindrical portion which extends through the outlet die 2, tapers conically to a point just at the entrance to the cylindrical portion of the bore through the die member 2. Thus, in the same way as described in relation to the embodiment of Figure 1, material from the plenum chambers 40, 46 and 50 proceeds along the respective supply passages to the central extrusion passage to proceed, as three concentric layers, towards the outlet die. However, the material of the innermost layer closes up again at the point of the mandrel, so that the material of the innermost layer forms a solid cylindrical core during passage of the plastics through the cylindrical part of the outlet die 2. It will be appreciated by those skilled in the art that when a foamed central core is desired, the plastics material fed to the plenum chamber 40, supplying the innermost layer, will in this case be plastics material incorporating a foaming agent, and that, due to the nature of the molten plastics material incorporating such a foaming agent, most of the illustrated expansion of the cross-sectional flow area of the extrusion passage downstream of the control ring 102 will be taken up by foaming or expansion of the material of the innermost layer, so that the intermediate and outermost layers will form a relatively thin coat on the relatively thick central core.

Whilst, in the embodiments described, a single layer, or the core, of the extruded product is produced by plastics material fed to a single plenum chamber defined by a groove around the mandrel, whereas the remaining, intermediate and outermost layers are formed by plastics material supplied from plenum chambers provided within the outer die structure which surrounds the mandrel, with the plastics material passing forwardly and inwardly towards the central extrusion passage, two or more layers may, if desired, be formed by plastics material supplied from a corresponding number of mandrel plenum chambers defined by respective grooves formed around the mandrel, in a manner similar to the plenum chamber 40, the material for the innermost layer, (or, in the case of a solid core product, the material for the core), being supplied from that one of the mandrel plenum chambers which is furthest downstream, with the or each of the remaining mandrel plenum chambers supplying material for respective intermediate layers of the product. In such a variant, it is envisaged that each of the mandrel plenum chambers might have a respective control ring, corresponding to control ring 102, disposed downstream thereof, with similar adjustment means provided therefor, so that the thickness, or the peripheral thickness distribution around the head axis, of each of the layers derived from any of the mandrel plenum chambers, may be adjusted, independently of any of the other layers, by operation of the adjustment means associated with the ring associated with that particular layer, which adjustment means extends through the mandrel in the same way as the adjustment means for the ring 102.

Alternatively the mandrel may be so configured as to define, within the mandrel, a plurality of plenum chambers connected with radially or conically outwardly extending resin flow passages which in turn meet, in respective annular outlets, the passage defined between the mandrel and the outer structure, each of the last-mentioned passages having a respective, independently adjustable control ring disposed on its radially outer, or radially inner side, as desired.

In the discussion above, it has been assumed that the various layers of the product are of materials having characteristics which differ in some way. However, it may also be advantageous to form two or more contiguous layers of precisely the same plastics material, for example to use apparatus such as that of Figure 1 for forming a pipe of single plastics material, as it has been found possible thereby to minimise the effects of the localised variations which tend to occur in a single extruded plastics layer, for example as a result of different durations and histories of passage of some portions of the plastics material through an extrusion head as compared with others. Conversely, it will be understood that the number of concentric layers which may be produced in a product is not limited to any particular number, so that four or more such layers may be produced using a head having a corresponding number of plenum chambers with associated control rings and resin flow passages, so that, for example, three, four or more outer layers might be produced from a corresponding number of plenum chambers in the outer head structure, and three or more inner layers might be produced from respective mandrel plenum chambers, or any desired number of layers might be allotted to corresponding numbers of mandrel plenum chambers and plenum chambers in the outer head structure, with each plenum chamber having associated therewith a respective independently adjustable control ring.

Whilst Figures 1, 11 and 12 relate to arrangements in which the extruded or coated product is substantially circular in cross section, with the plenum chambers, supply passages, etc. being correspondingly circular in cross section perpendicular to the head axis, it will be appreciated that similar apparatus could be used for extruding solid or hollow articles of any desired cross sectional shape, and that in such cases the cross sectional shapes of the extrusion passage, plastics supply passages, plenum chambers etc. would in general require to be modified correspondingly. Accordingly, the term "annular" as used herein is intended to cover any configuration of closed loop, e.g. whether circular, oval, rectangular etc. in form.

Furthermore, whilst, in the above discussion, the control rings have been assumed to be annular, (as herein defined), in certain applications control elements may be utilised which are not in the form of a closed loop, but are, for example, of helical or U-shaped form and are accommodated in grooves of complementary form formed in the mandrel or outer head structure, as appropriate.

CLAIMS

1. An extrusion head for use in producing multi-layered plastics products, the head comprising a central mandrel and an outer structure encircling the mandrel and defining, with the mandrel, a passage extending to an extrusion outlet, means for supplying plastics material to said passage at a position remote from the extrusion outlet, said passage including, at a position therealong which is downstream of the first-mentioned position, a portion of limited axial extent defined between the outer structure and an equalisation element accommodated within a complementary groove formed around the mandrel and projecting radially therefrom, said element being adjustable transversely of the longitudinal axis of the head by adjustment means extending, for access, to the exterior of the head, without passing through said passage, the head including at least one further supply passage which communications with the extrusion passage defined between the mandrel and the outer head structure at a position downstream of said ring.

2. An extrusion head according to claim 1 wherein said means for supplying plastics material to said passage defined between the mandrel and the outer structure includes at least one plenum chamber defined between the mandrel and the outer structure.

3. An extrusion head according to claim 2 wherein said means for supplying plastics material to said passage defined between the mandrel and the outer structure includes a plurality of plenum chambers spaced apart axially along the mandrel and each defined between the mandrel and the outer structure, and disposed downstream of each of said plenum chamber and upstream of any succeeding one of said plenum chambers, a respective said equalisation element accommodated within a respective complementary groove formed around the mandrel and projecting radially therefrom, each said element being adjustable transversely of the longitudinal axis of the head by adjustment means extending, for access, to the exterior of the head, without passing through said passage.

4. An extrusion head according to any of claims 1 to 3 wherein the or each said equalisation element is in the form of an equalisation ring which is received in an annular groove in the mandrel and has an internal diameter larger than the diameter of the bottom of the annular groove in the mandrel in which it is located, and said adjustment means comprises a plurality of adjusting rods extending longitudinally within the mandrel and each terminating in a respective wedging portion having a face, inclined with respect to the longitudinal axis of the respective rod, which bears upon the interior surface of the respective said equalisation ring, the adjustment means including means for adjusting the longitudinal positions of said adjusting rods to effect said transverse adjustment of the equalisation rings.

5. An extrusion head according to claim 4 wherein each said rod is engaged by an abutment, facing in the longitudinal direction of the rod, provided by a respective screw-threaded adjustment member screw-threadedly engaged in the head, with the axis of the screw thread being coincident with that of the respective rod, each said screw-threaded adjustment member being rotatable with respect to the respective rod, and each said rod being non-rotatable with respect to the outer structure so that each rod can be adjusted by rotational adjustment of the respective screw-threaded adjustment member.

6. An extrusion head according to any preceding claim wherein said further supply passage is defined within said outer structure and includes a localised radial restriction defined between a transversely adjustable equalisation ring projecting into said further supply passage, and the opposing wall of said further supply passage.

7. The combination of an extrusion head according to any of claims 1 to 6 with a nozzle adapted for engagement with the sprue bush of an injection mould and incorporating a valve mechanism operable automatically by engagement of said nozzle by the mould gate.

8. An extrusion head according to claim 1 wherein said mandrel terminates short of the said outlet, so that in operation, the annular-section flow of the innermost layer of plastics being passed along said passage can coalesce to pass through the extrusion outlet as a solid core.

9. A coating head for coating an elongate member of substantially uniform cross-section with plastics, comprising a head structure defining a through passage extending along an axis of the head, said structure including a rear part, the portion of said passage in which is of a cross section complementary with that of said elongate member, such as to receive said member as a longitudinally sliding, substantially sealing fit, and a forward part the part of said passage in which is such as to provide a desired clearance around a said member which fits closely within the part of said passage in the rear part, and said head structure defining at least one resin flow passage, of annular cross section, for plastics material, extending from a plenum chamber to meet the part of said through passage in said forward part of the head structure in an annular gap, said resin flow passage including a gap defined between an equalisation element and an opposing wall of said passage, means being provided for adjusting the position of said element relative to said opposing wall.

10. A plastics extrusion head including a main passage aligned along an axis of the head and extending to an extrusion outlet, and including at least one resin flow passage extending from a plenum chamber to said main passage, and wherein said resin flow passage includes a first portion extending from said plenum chamber parallel with the head axis and a second portion extending from said first portion to said main passage, and wherein said first portion includes a gap defined between an equalisation element and a radially opposing wall of the supply passage, means being provided for adjusting said equalisation element radially to adjust said gap.

11. A plastics extrusion head including a main passage aligned along an axis of the head and extending to an extrusion outlet, and including at least one resin flow passage extending from a plenum chamber to said passage, and wherein said plastics supply passage includes a first portion extending from said plenum chamber perpendicular to the head axis and a second portion extending from said first portion to said main passage, and wherein said first portion includes a gap defined between an equalisation element and an axially opposing wall of the resin flow passage, means being provided for adjusting said equalisation element axially to adjust said gap.

12. A method of producing a multilayered plastics product using the apparatus according to any of claims 1 to 6 or 8 to 11 comprising supplying plasticised plastics material to said resin flow passages to pass, in the form of respective streams, to the extrusion passage, to proceed along the extrusion passage as a plurality of concentric layers to the extrusion outlet, and adjusting the thickness of the or each of said layers which is formed of material which has passed through the or a respective said passage portion defined between the outer structure and said, or a said equalisation element, by operation of the adjustment means associated with the or the respective equalisation element accommodated within the or the respective complementary groove formed around the mandrel.

13. A method of forming a solid plastics product comprising a central core and one or more plastics layers surrounding the core, comprising extruding the product using the apparatus of claim 8.

14. A method according to claim 13 wherein the material supplied to form said central core incorporates a foaming agent so that said central core is formed as a foamed or expanded core.

15. A nozzle for fitting to apparatus for producing a flow of molten plastics material, to feed such material to a mould, the nozzle having an inlet, an outlet formed in an end portion adapted for engagement with the gate of an injection mould, the nozzle incorporating a valve mechanism operable automatically by engagement of said nozzle by a mould gate, whereby a passage for plastics flow through the nozzle between said inlet and said outlet is opened only when the nozzle is engaged with a mould gate.

16. A plastics product produced using the apparatus of any of claims 1 to 11 or by the method of any of claims 12 to 14.

Fig.1.

*Fig.3.*

*Fig.2.*

0074812

_Fig.4._

_Fig.5._

_Fig.6._

## _Fig.7_

(a)

(b)

(c)

48    60a

(e)

(d)

0074812

5/9

*Fig.8a.*

*Fig.8b.*

X

Fig.8c.

Fig.8d.

Fig.8e.

*Fig.9.*

406

404

400

*Fig.10.*

405

410

412

410

404

Fig. 11

452 412
450
446
448
411
423
404
405
406
407
408
421

# Fig.12.